# EUROPÄISCHE PATENTSCHRIFT

(11) **EP 3 155 277 B1**
(45) Veröffentlichungstag und Bekanntmachung des Hinweises auf die Patenterteilung: **06.06.2018**
(21) Anmeldenummer: 15733342.8
(22) Anmeldetag: 09.06.2015
(51) Int. Cl.: F16D 13/58

(54) **KUPPLUNGSVORRICHTUNG**
CLUTCH DEVICE
DISPOSITIF D'EMBRAYAGE

(30) Priorität: 10.06.2014 DE 102014211023
(43) Veröffentlichungstag der Anmeldung: 19.04.2017
(73) Patentinhaber: Schaeffler Technologies AG & Co. KG, 91074 Herzogenaurach (DE)
(72) Erfinder: WAGNER, Matthias, 77866 Rheinau (DE)
(86) Internationale Anmeldenummer: PCT/DE2015/200348
(87) Internationale Veröffentlichungsnummer: WO 2015/188824

(56) Entgegenhaltungen:
- DE-A1-102012 215 273
- DE-T5-112010 004 054
- US-A- 4 727 971

## Beschreibung

Die Erfindung betrifft eine Kupplungsvorrichtung. Insbesondere betrifft die Erfindung eine Kupplungsvorrichtung ohne Kupplungsdeckel.

Aus dem Stand der Technik sind Kupplungsvorrichtungen ohne Kupplungsdeckel bekannt. Entsprechende Kupplungsvorrichtungen sind beispielsweise in der WO 2013/067985 oder der US 4727971 A1 oder der WO 2010/000217 A1 beschrieben. Da keine separaten Kupplungsdeckel mehr vorhanden sind, werden diese Kupplungsvorrichtungen auch als deckellose Kupplungenbezeichnet.

Nachteilig am Stand der Technik ist, dass die erwähnten Kupplungsvorrichtungen einen komplexen Aufbau aufweisen.Bei einem Zusammenbau der einzelnen Komponenten der Kupplungsvorrichtungen ist ein erhöhter Zeitbedarf erforderlich, der mit Kosten verbunden ist.

Es besteht somit die technische Aufgabe, eine Kupplungsvorrichtung anzugeben, die die Nachteile aus dem Stand der Technik überwindet.

Die Aufgabe wird erfindungsgemäß insbesondere gelöst durcheine Kupplungsvorrichtung mit zumindest einer in axialer Richtung begrenzt verlagerbaren Anpressplatte zur reibschlüssigen Klemmung einer Kupplungsscheibe zwischen der Anpressplatte und einer Gegendruckplatte, und zumindest einem Hebelelement, das mittels einer Schwenklagerung verkippbar in der Kupplungsvorrichtung gelagert ist, dadurch gekennzeichnet, dass das Hebelelement durch mehrere in Umfangsrichtung der Kupplungsvorrichtung verteilt angeordnete, mit der Gegendruckplatte verbundene, sich in axialer Richtung erstreckende Hohlbolzen zentrierbar ist.

Durch das Vorsehen derdeckellosen Kupplungsvorrichtung mit den Hohlbolzen, sind die Herstell- und Materialkosten reduzierbar, ohne dabei technische Nachteile bei der Funktion der Kupplungsvorrichtung zu erlangen. Außerdem werden Steifigkeitsverluste, wie sie bei herkömmlichen Kupplungen auftreten, reduziert.

Mit den in Umfangsrichtung verteilt angeordneten Hohlbolzen ist das realisierbar. Hierbei nutzt man insbesondere die hohe Steifigkeit der Hohlbolzen und einesStützringes aus. Dabei kann auf einen Kupplungsdeckel verzichten werden.

Bevorzugt ist die Schwenklagerung am Hohlbolzen möglichst steif ausgestaltet. Hierzu ist der Hohlbolzen nach außen versetzt angeordnet und direkt mit derGegendruckplatte (Schwungrad) verbunden.

Vorzugsweise sind die Anpressplatte und die Gegendruckplatte aus Stahl gefertigt. Bevorzugt ist die Kupplungsvorrichtung eine Reibungskupplung.Besonders bevorzugt ist die Kupplungsvorrichtung für einen Antriebsstrang eines Kraftfahrzeugs vorgesehen.

In einer weiteren erfindungsgemäßen Ausführungsform weist die Anpressplatte Aussparungen für die Hohlbolzen auf, wobei die Anpressplatte mittels der Hohlbolzen drehfest an der Gegendruckplatte anbindbar ist.

Damit lässt sich die Anpressplatte auf einfache Weise in der Kupplungsvorrichtung zentrieren.

In einer weiteren erfindungsgemäßen Ausführungsformsind die Hohlbolzen eingerichtet, ein Verbindungsmittel aufzunehmen, um die Hohlbolzen mit der Gegendruckplatte zu verbinden.

Durch die Verwendung der Verbindungsmittel ist es möglich, die Hohlbolzen direkt mit der Gegendruckplatte zu verbinden. Vorzugsweise sind die Verbindungsmittel Schrauben. Bevorzugt weist die Gegendruckplatte ein Gewinde auf, um ein Eindrehen der Schraube zu ermöglichen. Besonders bevorzugt sind mindestens sechs Bolzenhülsen vorgesehen, um eine Zentrierung und/oder Fixierung zu erzielen.

Alternativ sind Niete für eine Nietverbindung vorgesehen, um die Hohlbolzen mit der Gegendruckplatte zu verbinden.

In einer weiteren erfindungsgemäßen Ausführungsformist in einer radialen Richtung auf der der zu einer Drehachse der Kupplungsvorrichtung innenliegenden Seite der Hohlbolzen die Schwenklagerung ausgebildet.

In einer weiteren erfindungsgemäßen Ausführungsform ist die Schwenklagerung für das Hebelelement durch ein gegendruckplattenseitiges Lager und einen aktorseitiges Stützblech ausgebildet.

Vorzugsweise ist das Hebelelement zwischen dem Lager und dem Stützblech drehbar gelagert. Damit ist eine drehbar gelagert Schwenklagerung bereitstellbar.

Bevorzugt weist das Hebelelement Aussparungen auf, um die Hohlbolzen durch das Hebelelement zu führen. Bevorzugt ist das Hebelelement eine Tellerfeder.

Vorzugsweise ist das Lager als Drahtring ausgebildet. Bevorzugt liegt das Lager auf einem Auflager auf, das vom Hohlbolzen ausgebildet ist.

Bevorzugt weist das Stützblech auskragende Bereiche auf, die um ca. 90° gegenüber dem Stützblechgeneigt sind. Besonders bevorzugt sind die auskragenden Bereiche fest mit dem Hohlbolzen verbunden. Vorzugsweise ist das Stützblech als offene oder als geschweißte Variante ausführbar.

In einer weiteren erfindungsgemäßen Ausführungsform steht in axialer Richtung die begrenzt verlagerbare Anpressplatte in radialer Richtung außerhalb der in Umfangsrichtung verteilten Hohlbolzen mit dem Hebelelement in Kontakt.

Auf diese Weise ist eine Kraft, die bei einem Ein- oder Auskuppeln erzeugt wird,vom Hebelelement auf die Anpressplatte übertragbar.

In einer weiteren erfindungsgemäßen Ausführungsform ist das Hebelelement mittels Blattfedern oder Druckfedern mit der Gegendruckplatte verbunden.

Damit ist eine einfach herzustellende Verbindung herstellbar.

In einer weiteren erfindungsgemäßen Ausführungsform sind die Blattfedern zumindest teilweise zwischen den Hohlbolzen und der Gegendruckplatte angeordnet, wobei die Druckfedern entlang der äußeren Mantelfläche der Hohlbolzen angeordnet sind.

Damit lassen sich die Blattfedern oder die Druckfedern auf einfache Weise in die Kupplungsvorrichtung einbringen.

In einer weiteren erfindungsgemäßen Ausführungsform sind die Blattfedern und die Druckfedern eingerichtet, die Anpressplatte in axialer Richtung von der Gegendruckplatte weg zu beaufschlagen.

Damit ist eine einfache Möglichkeit gegeben, die Anpressplatte in axialer Richtung von der Gegendruckplatte in ihre ursprüngliche unbelastete Position zu drücken.

In einer weiteren erfindungsgemäßen Ausführungsform weisen die Blattfedern Aussparungen für eine Anbindung mit den Hohlbolzen und der Anpressplatte auf.

Die Erfindung wird nun beispielhaft durch Figuren veranschaulicht. Es zeigen:
- **Fig. 1**: einen schematischen Schnitt durch einen Teilbereich einer erfindungsgemäßen Kupplungsvorrichtung im eingerückten Zustand,
- **Fig. 2**: ein Stützblech der erfindungsgemäßen Kupplungsvorrichtung aus Fig. 1,
- **Fig. 3**: eine Blattfeder der erfindungsgemäßen Kupplungsvorrichtung aus Fig. 1,
- **Fig. 4**: ein Hebelelement der erfindungsgemäßen Kupplungsvorrichtung aus Fig. 1,
- **Fig. 5**: eine Anpressplatte der erfindungsgemäßen Kupplungsvorrichtung aus Fig. 1,
- **Fig. 6**: einen schematischen Schnitt durch einen Teilbereich einer erfindungsgemäßen Kupplungsvorrichtung in einer alternativen Ausführungsform im eingerückten Zustand und
- **Fig.7**: einen schematischen Schnitt durch einen Teilbereich einer erfindungsgemäßen Kupplungsvorrichtung in einer weiteren alternativen Ausführungsform im eingerückten Zustand.

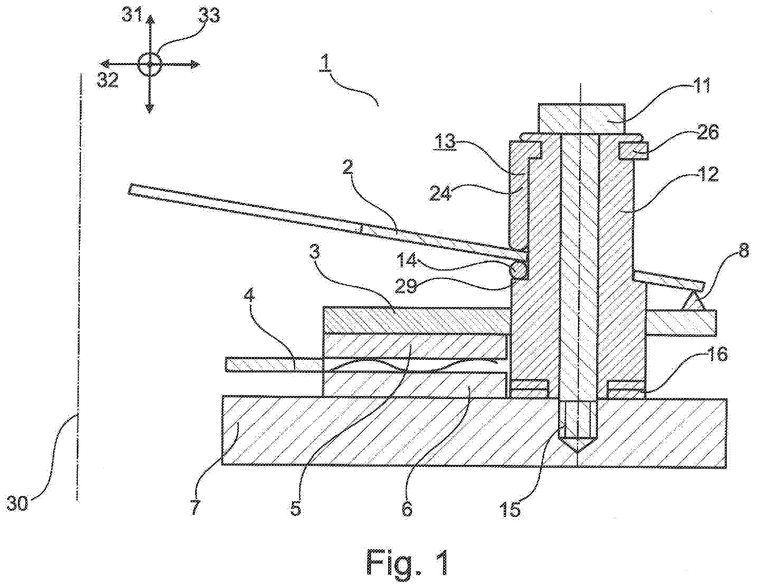

**Fig. 1** zeigt einen schematischen Schnitt durch einen Teilbereich einer erfindungsgemäßen Kupplungsvorrichtung im eingerückten Zustand.

Die Kupplungsvorrichtung 1 weist eine in axialer Richtung 31 begrenzt verlagerbare Anpressplatte 3 zur reibschlüssigen Klemmung einer Kupplungsscheibe 4 zwischen der Anpressplatte 3 und einer Gegendruckplatte 7 auf. Ferner weist die Kupplungsvorrichtung 1 zumindest ein Hebelelement 2 auf, das mittels einer Schwenklagerung 13, 14 verkippbar in der Kupplungsvorrichtung 1 gelagert ist. Das Hebelelement 2 ist als eine Tellerfeder ausgebildet.

Das Hebelelement 2 ist durch mehrere in Umfangsrichtung 33 der Kupplungsvorrichtung 1 verteilt angeordnete, mit der Gegendruckplatte 7 verbundene Hohlbolzen 12 zentriert, wobei vorliegend lediglich ein Hohlbolzen 12 abgebildet ist. Das Hebelelement 2 ist durch eine nicht dargestellte Aktoreinrichtungbetätigbar.

Die Anpressplatte 3 und die Gegendruckplatte 7 weisen Reibbeläge 5 und 6 auf.Die Reibbeläge 5 und 6 sind einander gegenüberliegend angeordnet. Die Anpressplatte 3 und die Gegendruckplatte 7 sind aus Stahl gefertigt.

Bei eingerückter Kupplungsvorrichtung 1 wird ein Drehmoment von einer Eingangsseite über die Gegendruckplatte 7 sowie die Anpressplatte 3 reibschlüssig auf die Kupplungsscheibe 4 übertragen. Von der Kupplungsscheibe 4 wird das Drehmoment zu einer Ausgangsseite übertragen, insbesondere zu einer Eingangswelle des Getriebes (nicht dargestellt).

Die Hohlbolzen 12 sind eingerichtet, ein Verbindungsmittel 11 aufzunehmen. Mittels des Verbindungsmittels 11 sind die Hohlbolzen 12 mit der Gegendruckplatte 7 verbindbar. Dabei wird das Verbindungsmittel 11 von oben in axialer Richtung 31 in eine Öffnung des Hohlbolzens 12 eingeführt. Das Verbindungsmittel 11 ist als eine Schraube ausgebildet. Der Hohlbolzen 12 wird mittels des Verbindungsmittels 11 an der Gegendruckplatte 7 verschraubt. Hierzu weist die Gegendruckplatte 7 ein Gewinde auf, um ein Eindrehen und einen festen Sitz der Schraube zu ermöglichen. Bevorzugt sind mindestens sechs Hohlbolzen 12 und sechs Schrauben für die Kupplungsvorrichtung vorgesehen.

Die Anpressplatte 3 weist Aussparungen auf, um die Hohlbolzen 12 aufzunehmen. Die Anpressplatte 3 ist mittels der Hohlbolzen 12 zentrierbar. Damit ist die Anpressplatte 3drehfest an der Gegendruckplatte 7 angebunden.

In radialer Richtung 32 auf der der zu einer Drehachse 30 der Kupplungsvorrichtung 1 innenliegenden Seite der Hohlbolzen 12 ist die Schwenklagerung 13, 14 ausgebildet.

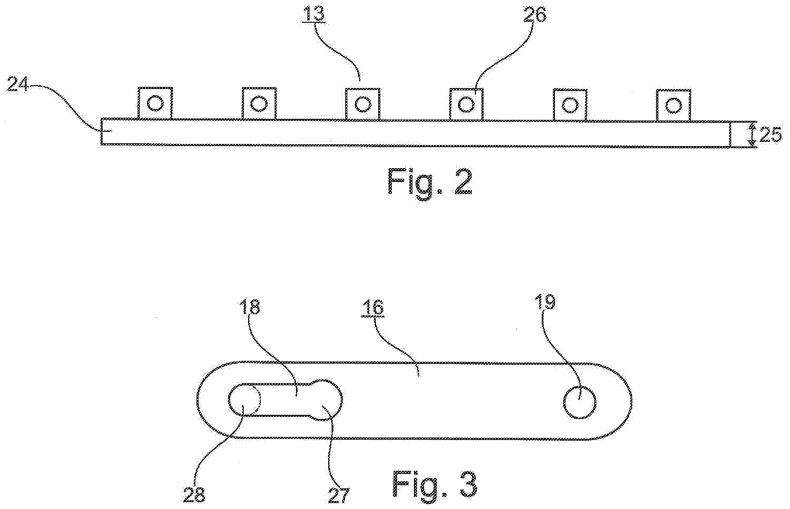

Die Schwenklagerung 13, 14 ist für das Hebelelement 2 durch ein gegendruckplattenseitiges Lager 14 und einen aktorseitiges Stützblech 13 ausgebildet.Das Lager 14 ist dabei als Drahtring ausgebildet. Das Hebelelement 2 ist zwischen dem Lager 14 und dem Stützblech 13 drehbar gelagert. Das Lager 14 liegt auf einem Auflager29 auf, dasvom Hohlbolzen 12 ausgebildet ist. Das Stützblech 13 (vgl. Fig. 2)weist auskragende Bereiche auf, die um ca. 90° gegenüber dem Stützblech 13 in radialer Richtung 32 geneigt sind. Die auskragenden Bereiche26 sind fest mit dem Hohlbolzen 12 verbunden.

In axialer Richtung 31 steht die begrenzt verlagerbare Anpressplatte 3 in radialer Richtung 32 außerhalb der in Umfangsrichtung verteilten Hohlbolzen 12 mit dem Hebelelement 2 in Kontakt. Dabei liegt eine Nocke 8 auf der Anpressplatte 3 zwischen der Anpressplatte 3 und dem Hebelelement 2.

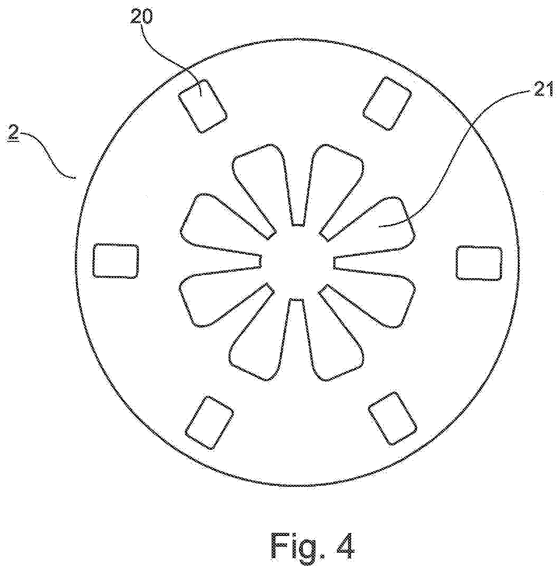

Das Hebelelement 2 weist Aussparungen für die Hohlbolzen 12 auf(vgl. Fig. 4). Das Hebelelement 2 ist mittels Blattfedern 16 mit der Gegendruckplatte 7 verbunden.Dabei sind die Blattfedern 16 in einem Kontaktbereich zumindest teilweise zwischen den Hohlbolzen 12 und der Gegendruckplatte 7 angeordnet. Die Blattfeder 16 werden in axialer Richtung 31 von der Gegendruckplatte 7 und der Anpressplatte 3 begrenzt. Die Blattfedern 16 sind eingerichtet, die Anpressplatte 3 in axialer Richtung 25 von der Gegendruckplatte 7 weg zu beaufschlagen.Die Blattfedern 16 weisen entsprechende Aussparungen für eine Anbindung mit den Hohlbolzen 12 und der Anpressplatte 3 auf(vgl. Fig. 3).

Damit Möglichkeit geschaffen, eine deckellose Kupplungsvorrichtung bereitzustellen, bei der die Herstell- und Materialkosten sowie Steifigkeitsverluste, wie sie bei herkömmlichen Kupplungen auftreten, reduziert werden können.

**Fig. 2** zeigt ein Stützblech der erfindungsgemäßen Kupplungsvorrichtung aus Fig. 1.

Das Stützblech 13 weist einen länglich und flach ausgebildeten Abschnitt 24 auf.Ferner weist das Stützblech 13 auskragende Bereiche 26 auf, die in Abständen zueinander an den Abschnitt 24 anschließen. Die auskragenden Bereiche 26 weisen eine kreisförmige Aussparung auf. Die auskragenden Bereiche 26 werden in radialer Richtung um 90° nach außen geknickt um mit den Hohlbolzen 12 über die kreisförmige Aussparung, wie in Fig. 1 dargestellt, fest verbunden zu werden.

Je mehr Hohlbolzen 12 in der Kupplungsvorrichtung 1 verwendet werden, desto geringer wird eine axiale Bauhöhe 25 des Stützbleches 13; d.h. die axiale Bauhöhe 25 ist von der Anzahl der Hohlbolzen 12 abhängig. Das Stützblech 13 ist offen oder als geschweißte Variante ausführbar.

**Fig. 3** zeigt eine Blattfeder der erfindungsgemäßen Kupplungsvorrichtung aus Fig. 1.

Die Blattfeder 16 weist eine Aussparung 18 zur Anbindung eines Hohlbolzens 12 und eine Aussparung 19 zur Anbindung der Anpressplatte 3 auf. Die Aussparung 18 ist an einem ersten Ende der Blattfeder 16 angeordnet. Die Aussparung 19 ist an einem zweiten Ende der Blattfeder 16 angeordnet. Beide Aussparungen 18, 19 liegen einander in der Blattfeder 16 gegenüber.

Um ein Einführen eines Hohlbolzens 12 in die Blattfeder 16 zu erleichtern ist die Aussparung 18 als Langloch ausgebildet, wobei der Hohlbolzen 12 zunächst über eine vergrößerte Öffnung 27 in die Aussparung 18 einbringbar ist. Der Hohlbolzen 12 wird dann von der vergrößerten Öffnung 27 im Langloch hin zu seiner endgültigen Position 28 verfahren. In der Position 28 verkantet sich der Hohlbolzen 12 fest in die Blattfeder 16.

**Fig. 4** zeigt ein Hebelelement 2 der erfindungsgemäßen Kupplungsvorrichtung aus Fig. 1.

Das Hebelelement 2 weist eine annähernd kreisrunde, flache Form auf. Ferner weist das Hebelelement 2 Aussparungen 20 und ein Tellerfederfenster 21 auf. Die Aussparungen 20 sind eingerichtet, Hohlbolzen 12 durch das Hebelelement 2 zu führen.

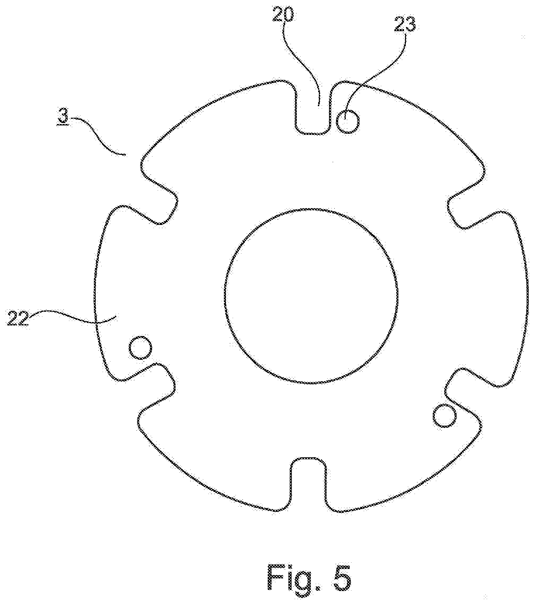

**Fig. 5** zeigt eine Anpressplatte der erfindungsgemäßen Kupplungsvorrichtung aus Fig. 1.

Die Anpressplatte 3 weist eine annähernd ringförmige, flache Form mit über den Umfang angeordneten Aussparungen 20 für die Hohlbolzen 12 auf. Ferner sind weitere Aussparungen 23 zur Anbindung von Blattfedern 16im Bereich der Aussparungen 20 vorgesehen.

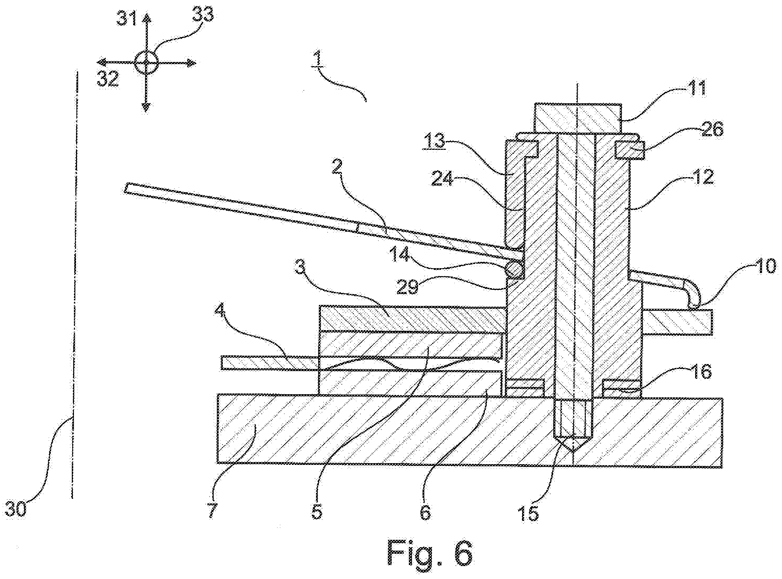

**Fig. 6** zeigt einen schematischen Schnitt durch einen Teilbereich einer erfindungsgemäßen Kupplungsvorrichtung in einer alternativen Ausführungsform im eingerückten Zustand.

Im Unterschied zur Fig. 1 ist das Hebelelement 2 anders ausgebildet. Das Hebelelement 2 weist ein Tellerfederauflager 10 auf, das als eine Verlängerung des Hebelelements 2 ausgebildet ist und an einem seiner Enden eine zur Anpressplatte 3 hin gekrümmte Form aufweist. Das Tellerfederauflager 10 liegt mit diesem Ende direkt auf der Anpressplatte 3 auf.

Die Blattfedern 16 sind eingerichtet, die Anpressplatte 3 in axialer Richtung 25 von der Gegendruckplatte 7 weg zu beaufschlagen.

Damit wird eine weitere Möglichkeit geschaffen, eine deckellose Kupplungsvorrichtung bereitzustellen, bei der die Herstell- und Materialkosten sowie Steifigkeitsverluste, wie sie bei herkömmlichen Kupplungen auftreten, reduziert werden können.

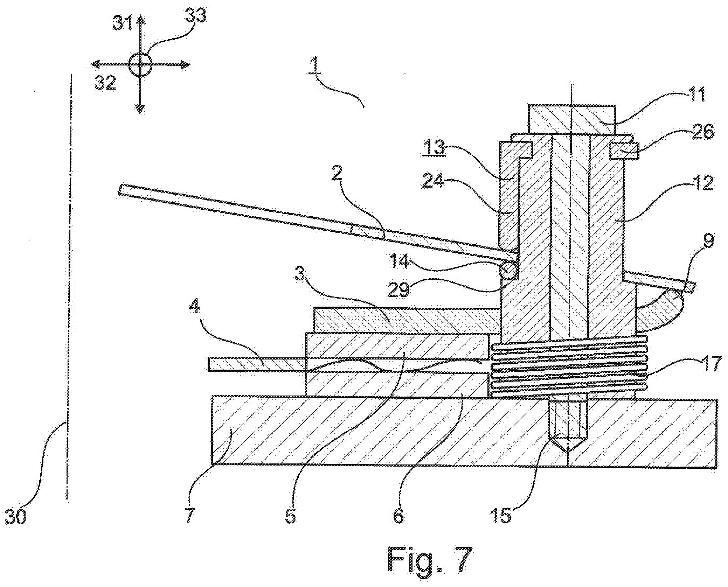

**Fig.7** zeigt einen schematischen Schnitt durch einen Teilbereich einer erfindungsgemäßen Kupplungsvorrichtung in einer weiteren alternativen Ausführungsform im eingerückten Zustand.

Im Unterschied zur Fig. 1 werden die Blattfedern 16 durch Druckfedern 17 ersetzt. Ferner wird auf die Nocke 8 verzichtet. Die Anpressplatte 3 weist einen Bereich auf, der als eine Nockenanpressplatte 9 ausgebildet ist. Die Nockenanpressplatte 9 liegt im Bereich der Nockenanpressplatte 9 direkt an einer Unterseite des Hebelelements 2 an.

Das Hebelelement 2 ist mittels derDruckfeder 17 mit der Gegendruckplatte 7 verbunden.Die Druckfeder 17 ist entlang der äußeren Mantelfläche der Hohlbolzen 12 angeordnet. D.h. dass die Druckfeder 17 einen Teilbereich des Hebelelements 2 umschließt.

Die Druckfeder 17 wird in axialer Richtung 31 von der Gegendruckplatte 7 und der Anpressplatte 3 begrenzt. Die Druckfeder 17 ist eingerichtet, die Anpressplatte 3 in axialer Richtung 31 von der Gegendruckplatte 7 weg zu beaufschlagen.

Damit wird eine weitere Möglichkeit geschaffen, eine deckellose Kupplungsvorrichtung bereitzustellen, bei der die Herstell- und Materialkosten sowie Steifigkeitsverluste, wie sie bei herkömmlichen Kupplungen auftreten, reduziert werden können.

### Bezugszeichenliste

- 1: Kupplungsvorrichtung
- 2: Hebelelement (Tellerfeder)
- 3: Anpressplatte
- 4: Kupplungsscheibe
- 5: Reibbelag
- 6: Reibbelag
- 7: Gegendruckplatte (Schwungrad)
- 8: Nocke
- 9: Nockenanpressplatte
- 10: Tellerfederauflager
- 11: Schraube
- 12: Hohlbolzen
- 13: Stützblech
- 14: Auflager (Drahtring)
- 15: Gewinde
- 16: Blattfeder
- 17: Druckfeder
- 18: Aussparung
- 19: Aussparung
- 20: Aussparung
- 21: Tellerfederfenster
- 22: Lappen
- 23: Aussparung
- 24: Abschnitt
- 25: Höhe
- 26: Bereich
- 27: Öffnung
- 28: Position
- 29: Auflager
- 30: Drehachse
- 31: axiale Richtung
- 32: radiale Richtung
- 33: Umfangsrichtung

## Patentansprüche

1. Kupplungsvorrichtung (1) mit zumindest einer in axialer Richtung (31) begrenzt verlagerbaren Anpressplatte (3) zur reibschlüssigen Klemmung einer Kupplungsscheibe (4) zwischen der Anpressplatte (3) und einer Gegendruckplatte (7), und zumindest einem Hebelelement (2), das mittels einer Schwenklagerung (13, 14) verkippbar in der Kupplungsvorrichtung (1) gelagert ist,
**dadurch gekennzeichnet, dass** das Hebelelement (2) durch mehrere in Umfangsrichtung(33) der Kupplungsvorrichtung (1) verteilt angeordnete, mit der Gegendruckplatte (7) verbundene, sich in axialer Richtung (31) erstreckende Hohlbolzen (12) zentrierbar ist.

2. Kupplungsvorrichtung (1) gemäß Anspruch 1, wobei die Anpressplatte (3) Aussparungen für die Hohlbolzen (12) aufweist und die Anpressplatte (3) mittels der Hohlbolzen (12) drehfest an der Gegendruckplatte (7) anbindbar ist.

3. Kupplungsvorrichtung (1) gemäß einem der vorherigen Ansprüche, wobei die Hohlbolzen (12) eingerichtet sind, ein Verbindungsmittel (11) aufzunehmen, um die Hohlbolzen (12) mit der Gegendruckplatte (7) zu verbinden.

4. Kupplungsvorrichtung (1) gemäß einem der vorherigen Ansprüche,wobei in einer radialen Richtung (32) auf der der zu einer Drehachse (24) der Kupplungsvorrichtung (1) innenliegenden Seite der Hohlbolzen (12) die Schwenklagerung (13, 14) ausgebildet ist.

5. Kupplungsvorrichtung (1) gemäß Anspruch 4, wobei die Schwenklagerung (13, 14) für das Hebelelement (2) durch ein gegendruckplattenseitiges Lager (14) und einen aktorseitiges Stützblech (13) ausgebildet ist.

6. Kupplungsvorrichtung (1) gemäß einem der vorherigen Ansprüche, wobei in axialer Richtung (31) die begrenzt verlagerbare Anpressplatte (3) in radialer Richtung (32) außerhalb der in Umfangsrichtung (33) verteilten Hohlbolzen (12) mit dem Hebelelement (2) in Kontakt steht.

7. Kupplungsvorrichtung (1) gemäß einem der vorherigen Ansprüche, wobei das Hebelelement (2) mittels Blattfedern (16) oder Druckfedern (17) mit der Gegendruckplatte (7) verbunden ist.

8. Kupplungsvorrichtung (1) gemäß Anspruch 7, wobei die Blattfedern (16) zumindest teilweise zwischen den Hohlbolzen (12) und der Gegendruckplatte (7) angeordnet sind und die Druckfedern (17)entlang der äußeren Mantelfläche der Hohlbolzen (12) angeordnet sind.

9. Kupplungsvorrichtung (1) gemäß einem der Ansprüche 7 bis 8,wobei die Blattfedern (16) und die Druckfedern (17) eingerichtet sind, die Anpressplatte (3) in axialer Richtung (31) von der Gegendruckplatte (7) weg zu beaufschlagen.

10. Kupplungsvorrichtung (1) gemäß einem der Ansprüche 7 bis 9, wobei die Blattfedern (16) Aussparungen für eine Anbindung mit den Hohlbolzen (12) und der Anpressplatte (3) aufweisen.

## Claims

1. Clutch apparatus (1) having at least one pressure plate (3) which can be moved to a limited extent in the axial direction (31) for clamping a clutch plate (4) in a frictionally locking manner between the pressure plate (3) and a counterpressure plate (7), and at least one lever element (2) which is mounted in the clutch apparatus (1) such that it can be tilted by means of a pivoting bearing (13, 14), **characterized in that** the lever element (2) can be centred by way of a plurality of hollow pins (12) which are arranged distributed in the circumferential direction (33) of the clutch apparatus (1), are connected to the counterpressure plate (7) and extend in the axial direction (31).

2. Clutch apparatus (1) according to Claim 1, the pressure plate (3) having cut-outs for the hollow pins (12), and it being possible for the pressure plate (3) to be attached fixedly by means of the hollow pins (12) to the counterpressure plate (7) so as to rotate with it.

3. Clutch apparatus (1) according to either of the preceding claims, the hollow pins (12) being set up to receive a connecting means (11), in order to connect the hollow pins (12) to the counterpressure plate (7).

4. Clutch apparatus (1) according to one of the preceding claims, the pivoting bearing (13, 14) being configured in a radial direction (32) on that side of the hollow pins (12) which lies on the inside with respect to a rotational axis (24) of the clutch apparatus (1).

5. Clutch apparatus (1) according to Claim 4, the pivoting bearing (13, 14) for the lever element (2) being configured by way of a counterpressure plate-side bearing (14) and an actuator-side supporting plate (13) .

6. Clutch apparatus (1) according to one of the preceding claims, in the axial direction (31) the pressure plate (3) which can be moved to a limited extent being in contact with the lever element (2) in the radial direction (32) outside the hollow pins (12) which are distributed in the circumferential direction (33) .

7. Clutch apparatus (1) according to one of the preceding claims, the lever element (2) being connected by means of leaf springs (16) or compression springs (17) to the counterpressure plate (7).

8. Clutch apparatus (1) according to Claim 7, the leaf springs (16) being arranged at least partially between the hollow pins (12) and the counterpressure plate (7), and the compression springs (17) being arranged along the outer circumferential face of the hollow pins (12).

9. Clutch apparatus (1) according to either of Claims 7 and 8, the leaf springs (16) and the compression springs (17) being set up to load the pressure plate (3) in the axial direction (31) away from the counterpressure plate (7).

10. Clutch apparatus (1) according to one of Claims 7 to 9, the leaf springs (16) having cut-outs for an attachment to the hollow pins (12) and the pressure plate (3).

## Revendications

1. Ensemble d'embrayage (1) présentant
au moins une plaque de poussée (3) apte à être déplacée de manière limitée dans la direction axiale (31) et qui vient serrer par frottement un disque d'embrayage (4) entre la plaque de poussée (3) et une plaque (7) de contre-poussée et
au moins un élément de levier (2) monté à pivotement dans l'ensemble d'embrayage (1) au moyen d'un palier de pivotement (13, 14),
**caractérisé en ce que**
l'élément de levier (2) peut être centré par plusieurs goujons creux (12) s'étendant dans la direction axiale (31), reliés à la plaque (7) de contre-poussée et répartis suivant la direction périphérique (33) de l'ensemble d'embrayage (1).

2. Ensemble d'embrayage (1) selon la revendication 1, dans lequel la plaque de poussée (3) présente des découpes pour les goujons creux (12) et en ce que la plaque de poussée (3) peut être reliée à rotation solidaire à la plaque (7) de contre-poussée au moyen des goujons creux (12).

3. Ensemble d'embrayage (1) selon l'une des revendications précédentes, dans lequel les goujons creux (12) sont conçus pour reprendre un moyen de liaison (11) en vue de relier les goujons creux (12) à la plaque (7) de contre-poussée.

4. Ensemble d'embrayage (1) selon l'une des revendications précédentes, dans lequel le palier de pivotement (13, 14) est formé dans une direction radiale (32) sur le côté des goujons creux (12) situés à l'intérieur par rapport à l'axe de rotation (24) de l'ensemble d'embrayage (1).

5. Ensemble d'embrayage (1) selon la revendication 4, dans lequel le palier de pivotement (13, 14) de l'élément de levier (2) est formé par un palier (14) situé du côté de la plaque de contre-poussée et par une tôle de soutien (13) située du côté de l'actionneur.

6. Ensemble d'embrayage (1) selon l'une des revendications précédentes, dans lequel dans la direction axiale (31) la plaque de poussée (3) apte à se déplacer de manière limitée est en contact avec l'élément de levier (2) à l'extérieur des goujons creux (12), répartis dans la direction périphérique (33), dans la direction radiale (32).

7. Ensemble d'embrayage (1) selon l'une des revendications précédentes, dans lequel l'élément de levier (2) est relié à la plaque (7) de contre-poussée au moyen de lames de ressort (16) ou de ressorts de compression (17).

8. Ensemble d'embrayage (1) selon la revendication 7, dans lequel les lames de ressort (16) sont disposées au moins en partie entre les goujons creux (12) et la plaque (7) de contre-poussée et les ressorts de compression (17) sont disposés le long de la surface d'enveloppe extérieure des goujons creux (12).

9. Ensemble d'embrayage (1) selon l'une des revendications 7 et 8, dans lequel les lames de ressort (16) et les ressorts de compression (17) sont conçus pour écarter la plaque de poussée (3) de la plaque (7) de contre-poussée dans la direction axiale (31).

10. Ensemble d'embrayage (1) selon l'une des revendications 7 à 9, dans lequel les lames de ressort (16) présentent des découpes permettant de les relier aux goujons creux (12) et à la plaque de poussée (3).
